# FASCICULE DE BREVET EUROPEEN

(11) **EP 2 656 221 B1**
(45) Date de publication et mention de la délivrance du brevet: **24.01.2018**
(21) Numéro de dépôt: 11804993.1
(22) Date de dépôt: 13.12.2011
(51) Int. Cl.: G06F 11/07, G05B 23/02

(54) **DISPOSITIF DE MAINTENANCE CENTRALISE POUR AERONEFS**
ZENTRALISIERTE WARTUNGSVORRICHTUNG FÜR FLUGZEUGE
CENTRALISED MAINTENANCE ARRANGEMENT FOR AIRCRAFTS

(30) Priorité: 23.12.2010 FR 1005086
(43) Date de publication de la demande: 30.10.2013
(73) Titulaire: THALES, 92400 Courbevoie (FR)
(72) Inventeur: ALBOUY, Christian, F-31340 Villemur-sur-tarn (FR); CHAZOTTES, Xavier, F-31036 Toulouse (FR)
(74) Mandataire: Brunelli, Gérald
(86) Numéro de dépôt international: PCT/EP2011/072650
(87) Numéro de publication internationale: WO 2012/084613

(56) Documents cités:
- FR-A1- 2 891 379
- FR-A1- 2 927 435
- FR-A1- 2 933 789
- FR-A1- 2 935 179

## Description

La présente invention concerne un dispositif de maintenance centralisé. Elle trouve son application notamment dans le domaine de la maintenance d'équipements embarqués à bord d'un aéronef.

Les aéronefs comportent de nombreux équipements embarqués électriques, mécaniques et informatiques. Le fonctionnement de ces équipements embarqués, dont les traitements sont nécessaires pour un bon déroulement du vol, sont surveillés notamment par l'équipage de l'aéronef au cours du vol. Toute défaillance d'un des équipements peut être rapportée soit par l'équipage de l'aéronef, soit par l'équipement lui-même, soit par un système de maintenance embarqué auquel l'équipement peut être relié. De retour au sol toutes les données concernant d'éventuelles défaillances sont collectées puis analysées par une équipe de maintenance au sol. Un des enjeux de la maintenance d'aéronef est de pouvoir identifier le plus rapidement possible des pannes critiques des équipements embarqués, ainsi que leur provenance afin d'apporter une correction rapide, pour éviter au maximum une immobilisation d'un aéronef au sol, très couteuse pour les compagnies aériennes.

Dans les aéronefs, un système de maintenance centralisé peut collecter des indicateurs de pannes provenant des équipements de l'aéronef ainsi que des alertes à destination de l'équipage de l'aéronef. Le système de maintenance centralisé dispose également de quelques données de contexte opérationnel comme des paramètres généraux relatifs à l'aéronef, par exemple : une date, un horodatage, une phase de vol, une phase de maintenance, un type d'avion, une immatriculation de l'avion, un numéro de vol, un aéroport de départ, un aéroport d'arrivée. Le système de maintenance centralisé effectue une corrélation temporelle entre les pannes et les alertes transmises à l'équipage ainsi qu'une corrélation entre les pannes de différents équipements de l'aéronef.

Par exemple, une panne est souvent relevée par des pilotes d'aéronef : une panne d'un radioaltimètre de l'aéronef. Un radioaltimètre est un système donnant l'altitude de l'avion par rapport au sol. Un domaine de validité d'une mesure d'un radioaltimètre est typiquement entre zéro et deux milles cinq cent pieds. Au dessus de deux milles cinq cent pieds, le radioaltimètre ne donne pas d'indication d'altitude. Hors, certains pilotes relèvent l'incident suivant dans un journal de bord de l'aéronef : « panne radioaltimètre, UTC ». UTC est un acronyme pour l'expression anglo-saxonne Coordinated United Time, signifiant temps universel coordonné. Une fois l'avion au sol, un opérateur de maintenance est en charge de remettre l'avion en bon état de fonctionnement en se basant sur les incidents relatés dans le journal de bord. Dans le cas de l'incident pris en exemple concernant le radioaltimètre, aucune alerte équipage n'a été levée par un FWS embarqué relié aux équipements. Un FWS est un système d'alerte en vol, ou Fligth Warning System. De plus aucune panne d'un LRU n'a été détectée par le système de maintenance centralisée. LRU est un acronyme pour l'expression anglo-saxonne Line Replaceable Unit, qui désigne un équipement embarqué à bord d'un aéronef. L'opérateur de maintenance ne dispose donc d'aucune information supplémentaire pour effectuer un diagnostique de l'incident mentionné dans le journal de bord. L'opérateur de maintenance, dans un tel cas, consulte un manuel de maintenance de l'avion afin de lancer un test sur le radioaltimètre. Le test permet de conclure que le radioaltimètre est en bon état de marche, ce qui est le cas. Il s'agit donc d'une fausse panne, levée par le pilote sans que cela en soit une.

De telles fausses pannes font perdre un temps précieux au sol à l'équipe de maintenance. Elles peuvent éventuellement masquer des pannes sérieuses, critiques pour l'avion.

La demande de brevet FR 2 927 435 A1 décrit un dispositif adapté à filtrer les messages de maintenance provenant d'équipements de test et de maintenance associés à des systèmes de l'aéronef. Le dispositif prend en compte des diagnostiques de défaillance, des symptômes observables via des alarmes, des phases de vol, des problèmes rapportés par l'équipage. Cependant, le dispositif ne prend pas en compte les paramètres de configuration des systèmes, le contexte opérationnel et le journal de bord. Une corrélation de données est faite correspondant à une association entre messages de maintenance et symptômes observables, ainsi qu'un regroupement des messages de maintenance de cause identique.

Un but de l'invention est notamment de pallier les inconvénients précités. A cet effet, l'invention a pour objet un dispositif de maintenance dispositif de maintenance centralisée, embarqué à bord d'un aéronef comprenant au moins une interface homme machine pour présenter des données de maintenance. Le dispositif centralisé de maintenance reçoit en entrée des données concernant :
- des pannes provenant de systèmes de l'aéronef ;
- des alertes provenant d'un système d'alerte de l'aéronef ;
- des configurations des systèmes de l'aéronef ;
- des contextes opérationnels de fonctionnement des systèmes de l'aéronef ;
- des marqueurs d'événements, positionnés par un équipage de l'aéronef ;
- un journal de bord, renseigné par l'équipage de l'aéronef ;
Ledit système de maintenance embarqué réalise en outre les fonctions suivantes :
- corrélation temporelle des données de pannes, d'alertes, de configurations, de contextes opérationnels, de marqueurs et du journal de bord, reçues sous la forme de données informatiques par le système de maintenance embarqué ;
- stockage des données reçues par le système de maintenance embarqué dans une première base de données ;
- gestion d'un historique des données reçues et de leur corrélation ;
- transmission à ladite au moins une interface homme machine des données reçues, de leur corrélation, d'une date associée à chaque donnée reçue ;
- affichage des données reçues, de leur corrélation et de la date associée à chaque donnée, par ladite au moins une homme machine du système de maintenance embarqué, dans lequel les données sont hiérarchisées selon la date associée. Dans un mode de réalisation particulièrement avantageux, la corrélation des données peut s'effectuer en fonction de règles et de critères définis dans une deuxième base de données, faisant partie au dispositif de maintenance embarqué.

Les données de configuration prises en compte par le dispositif de maintenance embarqué peuvent notamment comporter : une liste des systèmes de l'aéronef, un historique de mise à jour des systèmes de l'aéronef.

Les données de contexte opérationnel peuvent comporter notamment des paramètres physique de l'aéronef évoluant au cours du temps : coordonnées géographiques, altitudes, vitesses, masse, configuration aérodynamique, quantité de fuel embarqué, état de fonctionnement des équipements embarqués, conditions météorologiques.

L'invention a notamment pour principal avantage de présenter une version synthétique des données de maintenance.

D'autres caractéristiques et avantages de l'invention apparaîtront à l'aide de la description qui suit, donnée à titre illustratif et non limitatif, et faite en regard des dessins annexés qui représentent :
- la figure 1 : un dispositif de maintenance centralisé selon l'état de la technique ;
- la figure 2 : un dispositif de maintenance centralisé selon l'invention ;
- la figure 3 : un exemple de présentation de données gérées par le dispositif de maintenance centralisé ;
- la figure 4 : un exemple de corrélation de données gérées par le dispositif de maintenance centralisé selon l'invention.

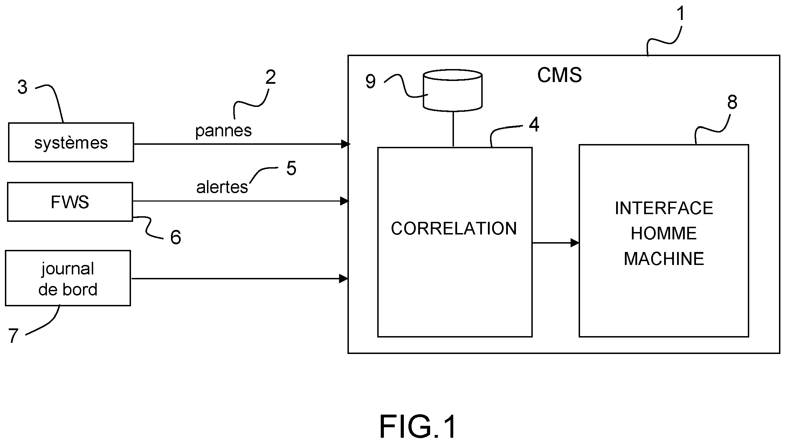

La figure 1 représente un premier dispositif de maintenance centralisé 1 selon l'état de la technique. Le CMS 1, acronyme pour l'expression anglo-saxonne, Centralised Maintenance Système, signifiant système de maintenance centralisé, reçoit en entrée les données suivantes :
- des indicateurs de pannes 2, provenant de systèmes ou équipements 3 de l'aéronef ;
- des alertes 5 provenant d'un FWS 6 de l'aéronef, FWS étant un acronyme pour l'expression anglo-saxonne Fligth Warning System, signifiant système d'alerte en vol ;
- un journal de bord 7 tenu par l'équipage de l'aéronef.
Le premier CMS 1 effectue une corrélation temporelle 4 des données reçues 2, 5, 7. Les données corrélées sont ensuite transmise à une première interface homme-machine 8 du premier CMS 1. Le premier CMS 1 comporte notamment une base de données 9 comportant des données de configuration de l'aéronef qui peuvent être utilisées par la corrélation 4 afin de fournir des informations supplémentaires associées aux données présentées sur l'interface homme machine 8. Un tel système centralisé de maintenance permet uniquement un traitement curatif des pannes détectées au cours du vol.

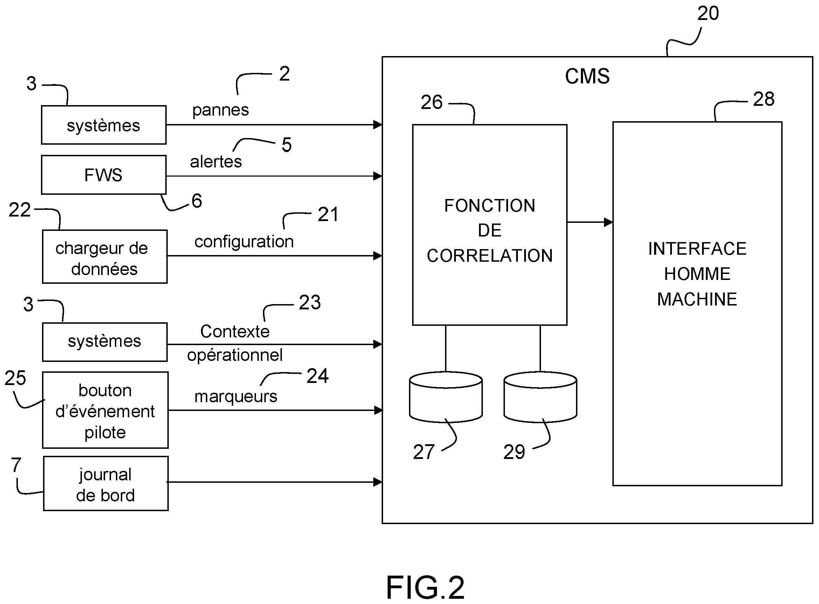

La figure 2 représente un dispositif deuxième de maintenance centralisé CMS 20, selon l'invention.

Le deuxième CMS 20 reçoit notamment les données suivantes en entrée :
- les indicateurs de pannes 2, provenant des systèmes ou équipements 3 de l'aéronef ;
- les alertes 5 provenant du FWS 6 de l'aéronef ;
- le journal de bord 7 tenu par l'équipage de l'aéronef ;
- des données de configuration 21 de l'aéronef, fournies par un chargeur de données 22 ;
- un contexte opérationnel 23 fournit par les systèmes 3 de l'aéronef ;
- des marqueurs 24 provenant d'un système gérant des événements pilotes, c'est-à-dire des événements pour lesquels le pilot de l'aéronef a voulu lever une alerte en utilisant un commutateur couramment nommé « pilot event button », signifiant littéralement bouton d'événement pilote 25.
Les données de configuration 21 peuvent comporter notamment : un historique de mise à jour des LRU, LRU étant un acronyme pour l'expression anglo-saxonne Line Replaceable Unit. L'expression LRU désigne un équipement embarqué à bord d'un aéronef. L'historique de mise à jour des LRU comporte notamment : des identifications de changements de version de logiciel ou de matériel, un changement du numéro de série du LRU, une date de téléchargement d'un logiciel, ou de mise à jour dudit logiciel.
Les données de configuration 21 comportent en outre des informations sur la configuration courante de l'aéronef, par exemple les matériels embarqués par l'aéronef de manière optionnelle, comme trois radios VHF. VHF est un acronyme pour l'expression anglo-saxonne Very High Frequency, signifiant très haute fréquence. Les données de configuration 21 peuvent également comporter une description de capacités opérationnelles comme une activation d'une fonction, par exemple :
- une fonction de prédiction du cisaillement du vent d'un radar météo ;
- un système CPDLC, acronyme pour l'expression anglo-saxonne Controleur Pilot Data Link Communications, qui est une liaison de données pour des échanges textuels directs entre un pilote de l'aéronef et un contrôleur aérien ;
- un système ADS-B, acronyme pour l'expression anglo-saxonne Automatic dependent surveillance-broadcast, signifiant système de surveillance coopératif pour le contrôle du trafic aérien ;
- un FANS, acronyme pour l'expression anglo-saxonne Future Air Navigation System qui est un système de navigation permettant une communication par une liaison de données directe entre le contrôleur aérien et le pilote ;
- d'autres liaisons de données
La configuration courante de l'aéronef peut également comporter des versions particulières de logiciels.
Le contexte opérationnel peut notamment comporter les données suivantes :
- des marqueurs générés sur requête du pilote, en appuyant sur le « pilot event button » ;
- des paramètres physiques de l'aéronef, évoluant au cours du temps : coordonnées géographiques, altitudes, vitesses, accélérations, accélération verticale en phase d'atterrissage, masse de l'aéronef, quantité de fuel embarqué, configuration aérodynamique, conditions météorologiques, états des systèmes embarqués, état de l'alimentation électrique des équipements.
La configuration aérodynamique de l'aéronef peut par exemple comporter une indication sur la position des trains d'atterrissage de l'aéronef : entrés, sortis.
Les conditions météorologiques peuvent comporter les paramètres suivants évoluant au cours du vol de l'aéronef : température, pression atmosphérique, taux d'humidité de l'air, temps orageux, conditions givrantes, turbulences.
Le deuxième CMS 20 réalise notamment les traitements suivants :
- une corrélation par une fonction de corrélation 26 des données de pannes, d'alertes, de contexte opérationnel, de configuration de l'aéronef, de marqueurs 24, du journal de bord 7, reçues par le deuxième CMS 20 ;
- un stockage des données reçues et de leur corrélation pour plusieurs vols consécutifs dans une première base de données 27 ;
- une gestion de l'historique des données reçues et de leur corrélation ;
- une présentation des données reçues, en fonction de l'historique réalisé par la fonction de gestion de l'historique, par une deuxième interface homme-machine 28 ;
La fonction de corrélation peut effectuer une corrélation entre toutes les données reçues en fonction de critères et de règles métiers qui peuvent être définies dans une deuxième base de données 29.

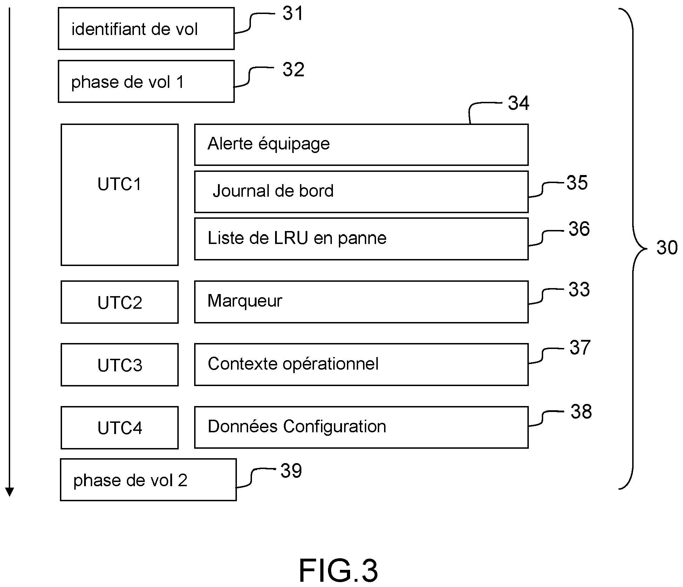

La figure 3 représente un exemple de présentation de données gérées par le deuxième dispositif de maintenance centralisé 20 selon l'invention. L'ensemble des données de maintenance 30 peut être présenté sous la forme d'une liste de données hiérarchisées dans un ordre déterminé. L'ordre de hiérarchisation peut être selon la date associée à chaque donnée, en présentant par exemple la donnée la plus ancienne en dernier. Les données de maintenance peuvent être associées à un vol identifié par un identifiant de vol 31. Ensuite les données peuvent être classées par phase de vol : par exemple une première phase de vol 32 nommée phase de vol1 par exemple, peut comporter les données suivantes :
- pour un premier instant UTC1 : une alerte équipage 34, un journal de bord 35, une liste de LRU en panne 36 ;
- pour un deuxième instant UTC2 : un marqueur 33 ;
- pour un troisième instant UTC3 : un contexte opérationnel 37 ;
- pour un quatrième instant UTC4 : des données de configuration de l'aéronef 38 ;
Une deuxième phase de vol 39 nommé phase de vol2 peut également comporter des données de maintenance, non listées sur la figure 3. Avantageusement, le dispositif selon l'invention permet de présenter à un opérateur de maintenance un ensemble de données de maintenance regroupées selon l'instant de leur survenue et selon leur pertinence. Par exemple, une panne touchant par exemple plusieurs LRU peut être signalée à l'équipage par une alerte équipage 34, puis notée par l'équipage sur le journal de bord 35 et enfin le deuxième CMS 20 peut associer à ces informations une liste des LRU en pannes, si les LRU lui ont communiqué cette information. Ces données corrélées peuvent être associées à un premier instant UTC1 correspondant par exemple à l'instant de l'alerte équipage. Ainsi le personnel de maintenance dispose d'informations lui permettant de comprendre rapidement les événements ayant entrainés la panne, et de juger de l'étendue et de la criticité de la panne.

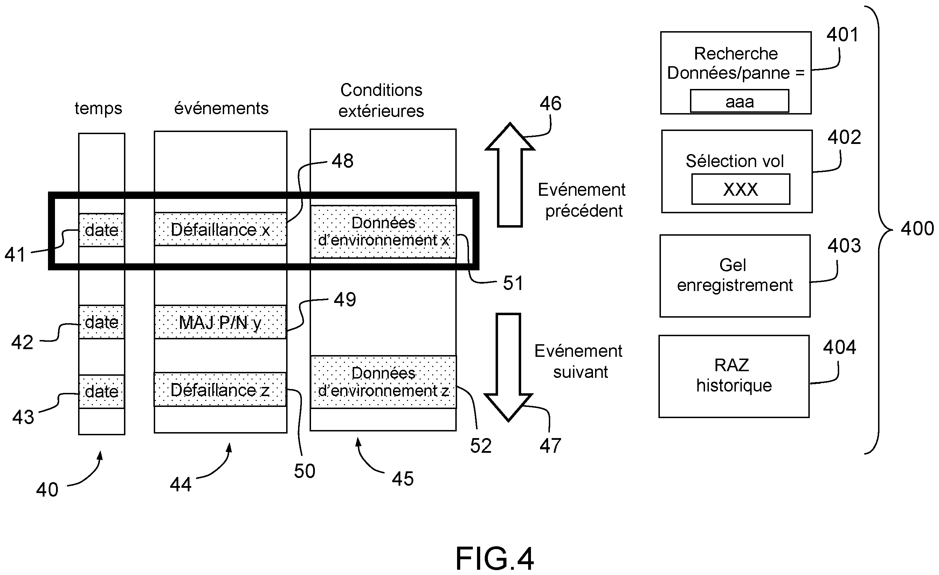

La figure 4 représente un exemple d'une deuxième interface homme-machine 28 présentant les données de maintenance corrélées par le deuxième dispositif de maintenance centralisé 20 selon l'invention.

La figure 4 représente, sur une échelle temporelle 40 notée « temps », les différentes dates 41, 42, 43 de survenue des événements listés dans une colonne « événements » 44. Les dates 41, 42, 43 peuvent être ordonnées par exemple de la date la plus ancienne 41 en haut de l'affichage 400 des données de maintenance sur la deuxième interface homme-machine 28 à la date la plus récente 43 en bas de l'affichage 400. A chaque donnée de type événement peuvent être associées des données d'environnement extérieur ou « condition extérieures » 45. Une première flèche 46 vers le haut permet à un opérateur d'afficher un événement précédent un premier événement affiché 48. Une deuxième flèche 47 vers le bas permet à un opérateur d'afficher un événement suivant un dernier événement affiché 44. D'autres interfaces 401, 402, 403, 404 permettent à un opérateur de consulter des données particulière en effectuant par exemple :
- une recherche d'une panne particulière ou d'une donnée particulière 401 dans la première base de données de maintenance 27 gérée par le deuxième CMS 20 ;
- une sélection de données associées à un vol particulier 402 parmi les données de maintenance gérées dans la première base de données 27 ;
Une deuxième interface 403 permet à un opérateur de demander un « gel enregistrement » qui a notamment pour fonction un enregistrement des données de maintenance par le deuxième CMS 20 selon l'invention.
Une troisième interface 404 permet une remise à zéro de l'historique : RAZ historique ayant pour objectif de vider la première base de données de maintenance 27.
Parmi les événements 48, 49, 50 représentés pour l'exemple sur la figure 4 :
- un premier événement 48 nommé « défaillance x » peut survenir à une première date 41 et être lié à des premières conditions extérieures « données d'environnement x » 51 ;
- un deuxième événement 49 nommé « MAJ P/N y » signifiant Mise à Jour Part Number y, Part Number étant une expression anglo-saxonne signifiant identifiant, ledit deuxième événement 49 peut survenir à une deuxième date 42 et n'être liée à aucune condition extérieure particulière ;
- un troisième événement 50 nommé « défaillance z » peut survenir à une troisième date 43 et être lié à des conditions extérieures nommées par exemple « données d'environnement z ».
La deuxième interface homme machine 400 représentée sur la figure 4 est donnée à titre d'exemple, d'autres représentation sont possibles selon les applications.

Avantageusement, le dispositif selon l'invention permet d'établir un diagnostic de panne très pertinent et d'éliminer notamment les fausses pannes au sein du système de maintenance centralisé.

## Revendications

1. Dispositif de maintenance centralisée (20) embarqué à bord d'un aéronef comprenant au moins une interface homme machine pour présenter des données de maintenance, **caractérisé en ce qu'**il reçoit en entrée des données concernant :
• des pannes (2) provenant de systèmes (3) de l'aéronef ;
• des alertes (5) provenant d'un système d'alerte (6) de l'aéronef ;
• des configurations (21) des systèmes (3) de l'aéronef ;
• des contextes opérationnels (23) de fonctionnement des systèmes (3) de l'aéronef ;
• des marqueurs d'événements (24), positionnés par un équipage de l'aéronef ;
• un journal de bord (7), renseigné par l'équipage de l'aéronef ;
ledit système de maintenance embarqué (20) réalisant en outre les fonctions suivantes :
• corrélation temporelle des données (26) de pannes, d'alertes, de configurations, de contextes opérationnels, de marqueurs et du journal de bord, reçues par le système de maintenance embarqué (20) ;
• stockage des données reçues par le système de maintenance embarqué (20) dans une première base de données (27) ;
• gestion d'un historique des données reçues et de leur corrélation ;
• transmission à ladite au moins une interface homme machine (28) des données reçues, de leur corrélation, d'une date associée à chaque donnée reçue ;
• affichage des données reçues, de leur corrélation et de la date associée à chaque donnée, par ladite au moins une interface homme machine (28) du système de maintenance embarqué (20), dans lequel les données sont hiérarchisées selon la date associée.

2. Dispositif selon la revendication 1, **caractérisé en ce que** la corrélation des données (26) s'effectue en fonction de règles et de critères définis dans une deuxième base de données (29) faisant partie au dispositif de maintenance embarqué (20).

3. Dispositif selon l'une quelconque des revendications précédentes, **caractérisé en ce que** les données de configuration (23) prises en compte par le dispositif de maintenance embarqué (20) comportent : une liste des systèmes (3) de l'aéronef, un historique de mise à jour des systèmes (3) de l'aéronef.

4. Dispositif selon l'une quelconque des revendications précédentes, **caractérisé en ce que** les données de contexte opérationnel (23) comportent des paramètres physique de l'aéronef évoluant au cours du temps : coordonnées géographiques, altitudes, vitesses, masse, configuration aérodynamique, quantité de fuel embarqué, état de fonctionnement des équipements embarqués, conditions météorologiques.

## Patentansprüche

1. Zentralisierte Wartungsvorrichtung (20) an Bord eines Luftfahrzeugs, die wenigstens eine Mensch-Maschinen-Schnittstelle zum Präsentieren von Wartungsdaten umfasst, **dadurch gekennzeichnet, dass** sie Eingangsdaten empfängt über:
• Störungen (2), die von Systemen (3) des Luftfahrzeugs stammen;
• Alarme (5), die von einem Alarmsystem (6) des Luftfahrzeugs stammen;
• Konfigurationen (21) von Systemen (3) des Luftfahrzeugs;
• operative Betriebskontexte (23) der Systeme (3) des Luftfahrzeugs;
• Ereignismarker (24), positioniert von einer Besatzung des Luftfahrzeugs;
• ein Logbuch (7), ausgefüllt von der Besatzung des Luftfahrzeugs;
wobei das Bordwartungssystem (20) ferner die folgenden Funktionen ausführt:
• zeitliches Korrelieren der Daten (26) über Störungen, Alarme, Konfigurationen, operative Kontexte, Marker und das Logbuch, empfangen vom Bordwartungssystem (20);
• Speichern der vom Bordwartungssystem (20) empfangenen Daten in einer ersten Datenbank (27);
• Verwalten einer Historie der empfangenen Daten und ihrer Korrelation;
• Übertragen der empfangenen Daten, ihrer Korrelation, eines mit jedem empfangenen Datenelement assoziierten Datums zu der wenigstens einen Mensch-Maschinen-Schnittstelle (28);
• Anzeigen der empfangenen Daten, ihrer Korrelation und des mit jedem Datenelement assoziierten Datums, durch die wenigstens eine Mensch-Maschinen-Schnittstelle (28) des Bordwartungssystems (20), in dem die Daten nach ihrem assoziierten Datum priorisiert sind.

2. Vorrichtung nach Anspruch 1, **dadurch gekennzeichnet, dass** die Korrelation der Daten (26) in Abhängigkeit von Regeln und Kriterien erfolgt, definiert in einer zweiten Datenbank (29), die Teil der Bordwartungsvorrichtung (20) ist.

3. Vorrichtung nach einem der vorherigen Ansprüche, **dadurch gekennzeichnet, dass** die von der Bordwartungsvorrichtung (20) berücksichtigten Konfigurationsdaten (23) Folgendes umfassen: eine Liste von Systemen (3) des Luftfahrzeugs, eine aktualisierte Historie von Systemen (3) des Luftfahrzeugs.

4. Vorrichtung nach einem der vorherigen Ansprüche, **dadurch gekennzeichnet, dass** die operativen Kontextdaten (23) sich im Laufe der Zeit ändernde physikalische Parameter des Luftfahrzeugs umfassen: geografische Koordinaten, Höhen, Geschwindigkeiten, Masse, aerodynamische Konfiguration, Bordkraftstoffmenge, Betriebszustand von Bordausrüstung, meteorologische Bedingungen.

## Claims

1. A centralized maintenance device (20) installed on-board an aircraft, comprising at least one man-machine interface to display maintenance data, **characterised in that** it receives as input data relating to:
• failures (2) originating from systems (3) of the aircraft;
• warnings (5) coming from a warning system (6) of the aircraft;
• configurations (21) of the systems (3) of the aircraft;
• operational contexts (23) of functioning of the systems (3) of the aircraft;
• event flags (24), set by a crew of the aircraft;
• a logbook (7), filled in by the crew of the aircraft;
said on-board maintenance system (20) also carrying out the following functions:
• temporal correlation of data (26) relating to failures, warnings, configurations, operational contexts, flags and the logbook, received by the on-board maintenance system (20);
• storage of the data received by the on-board maintenance system (20) in a first database (27);
• management of a historical record of the data received and of their correlation;
• transmission to said at least one man-machine interface (28) of the data received, of their correlation, and of a date associated with each item of data received;
• display of the received data, their correlation and the date associated with each item of data, by said at least one man-machine interface (28) of the on-board maintenance system (20) in which the data are ordered according to the associated date.

2. The device according to Claim 1, **characterised in that** the correlation of the data (26) is carried out according to rules and criteria defined in a second database (29), forming part of the on-board maintenance device (20).

3. The device according to any of the preceding claims, **characterised in that** the configuration data (23) taken into account by the on-board maintenance device (20) comprise: a list of the systems (3) of the aircraft and a historical record of updates of the systems (3) of the aircraft.

4. The device according to any of the preceding claims, **characterised in that** the operational context data (23) comprise physical parameters of the aircraft varying over the course of time: geographical coordinates, altitudes, speeds, mass, aerodynamic configuration, quantity of fuel on-board, operational state of the on-board items of equipment, meteorological conditions.
